# EUROPÄISCHE PATENTANMELDUNG

(11) **EP 1 308 233 A1**
(43) Veröffentlichungstag der Anmeldung: **07.05.2003**
(21) Anmeldenummer: 02022605.6
(22) Anmeldetag: 09.10.2002
(51) Int. Cl.: B23K 9/00, B23K 9/20, B23K 35/02, B23K 11/00

(54) **Stützeinrichtung für einen Schweissbolzen**

(30) Priorität: 31.10.2001 DE 10153675
(71) Anmelder: Köster & Co. GmbH, 58256 Ennepetal (DE)
(72) Erfinder: Hemonic, Yannick, 56300 St. Thuriau (FR); Irgang, Günter, 77580 Crecy la Chapelle (FR)
(74) Vertreter: Sparing - Röhl - Henseler Patentanwälte

(57) **Zusammenfassung**

Die Erfindung betrifft eine Stützeinrichtung für einen Schweißbolzens aus Rundstahl in Form eines schweineschwanzförmigen Hakens, der einen geraden Abschnitt (14) und einen im wesentlichen kreisförmig gebogenen Abschnitt (15) aufweist, beim Verschweißen mit einer Schweißpistole, wobei eine Fußplatte (1), die wenigstens eine Säule (2) zum Verbinden der Stützeinrichtung mit der Schweißpistole trägt, und ein über die Schweißpistole spannungsbeaufschlagbares Kontaktstück (5) vorgesehen ist, wobei in der Fußplatte (1) ein Schlitz (11) zur Aufnahme eines den Schweißbolzen (13) am Ende seines geraden Abschnitts (14) aufnehmenden Keramikrings (12) vorgesehen ist, und das Kontaktstück (5) eine Halterung für den gebogenen Abschnitt (15) des Schweißbolzens (13) bildet.

## Beschreibung

Die Erfindung betrifft eine Stützeinrichtung für einen Schweißbolzen gemäß dem Oberbegriff des Anspruchs 1.

An Schiffswänden und dergleichen Flächen werden zum Durchführen von Arbeiten halbkreisförmige Haken angeschweißt, die zum Anhängen von Fangnetzen zur Absicherung von Personal dienen. Dies ist sehr aufwendig und nicht sehr sicher in Bezug auf die Unverlierbarkeit derartiger Fangnetze.

Aus DE-C-197 34 191 ist ein Bolzenhalter für einen hakenförmigen Schweißbolzen bekannt, der eine Fußplatte umfaßt, die am Ende einer Säule zum Verbinden des Bolzenhalters mit einer Schweißpistole angeordnet ist. Die Fußplatte umfaßt eine sich in Richtung des anzuschweißenden geraden Endabschnitts des Schweißbolzens sich erstreckende kerbartige Nut und zwei seitlich daran befestigte Blattfedern, die an ihren Enden Klemmbacken tragen, so daß ein von der kerbartigen Nut teilweise aufgenommener Schweißbolzen über die Klemmbacken an der Fußplatte in Position gehalten wird. Außerdem ist an der Säule eine als Kontaktstück dienende Platte vorgesehen. Einerseits läßt sich bei einem derartigen Bolzenhalter kein Keramikring beim Verschweißen des Schweißbolzen verwenden, der das Schweißbad begrenzt, und andererseits ist eine sichere Halterung des Schweißbolzen beim Schweißen nicht gewährleistet, da dieser nur im wesentlichen punktuell an der Fußplatte gehalten wird und damit unter Krafteinwirkung verkippen kann. Beides kann zu einem ungenügenden Verschweißen der Schweißbolzen führen, so daß u.U. diese die vorgesehenen Lasten nicht tragen können.

Beispielsweise aus DE-A-3 131 055 ist die Verwendung eines Keramikrings beim Bolzenschweißen an sich bekannt.

Aufgabe der Erfindung ist es, eine Stützeinrichtung für einen Schweißbolzen gemäß dem Oberbegriff des Anspruchs 1 zu schaffen, die ein sicheres Verschweißen der Schweißbolzen gewährleistet.

Diese Aufgabe wird durch eine Stützeinrichtung entsprechend dem kennzeichnenden Teil des Anspruchs 1 gelöst.

Hierdurch wird die Möglichkeit der Verwendung eines Keramikrings und eine sichere Halterung des Schweißbolzen während des Schweißen geboten, so daß ein entsprechend sicheres Verschweißen der Schweißbolzen gewährleistet wird.

Die Verwendung von Schweißbolzen aus Rundstahl in Form eines schweineschwanzförmigen Hakens, der einen geraden Abschnitt und einen im wesentlichen kreisförmige gebogenen Abschnitt aufweist, wobei insbesondere der gebogene Abschnitt mit Abstand im wesentlichen über dem geraden Abschnitt endet, ermöglicht ein unverlierbares, leichtes und sicheres Einhängen von Fangnetzen oder jeglicher anderer, mit Schlaufen, Seilen oder Haken versehener Gegenstände und damit eine Sicherheitsbefestigung und -halterung für alle Formen von Fangnetzen oder Sicherheitsseilen, -haken etc.

Auf diese Weise lassen sich mit entsprechend angeschweißten Schweißbolzen Freiräume im Stahlbetonbau, größeren Durchführungen in Schiffbausektionen, jegliche größere und gefährliche Öffnungen bis zum Anbringen von Sicherheitsgeländern, Treppenaufgänge, Fahrstuhlschächte sichern. Außerdem können die angeschweißten Schweißbolzen als Halterungen im Gerüstbau und dergleichen dienen.

Weitere Ausgestaltungen der Erfindung sind den Unteransprüchen und der nachfolgenden Beschreibung zu entnehmen.

Die Erfindung wird nachstehend anhand eines in der beigefügten Abbildung dargestellten Ausführungsbeispiels näher erläutert.
Fig. 1 zeigt eine Draufsicht einer Stützeinrichtung mit einem Schweißbolzen.
Fig. 2 zeigt eine Frontansicht der Stützeinrichtung von Fig. 1.

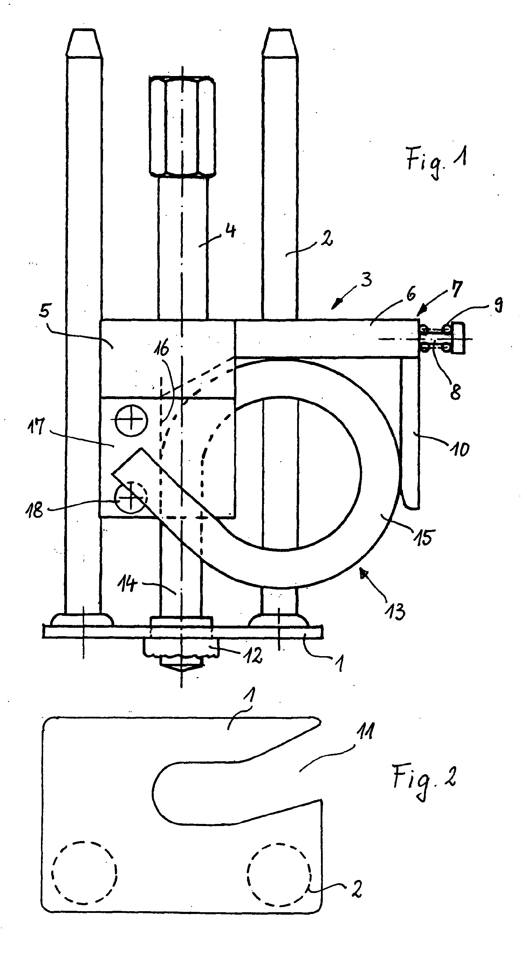

Die dargestellte Stützeinrichtung umfaßt eine Fußplatte 1, an der zwei parallelen, in einer Ebene angeordneten, sich senkrecht zur Fußplatte 1 erstreckenden Säulen 2 befestigt sind, die mit einer - nicht dargestellten - Schweißpistole zum elektrischen Bolzenschweißen verbindbar sind, indem sie beispielsweise in entsprechende Bohrungen in der Schweißpistole einsteckbar und befestigbar sind.

Zur Stützeinrichtung gehört ferner eine Bolzenhalterung 3, die im dargestellten Ausführungsbeispiel eine stangenförmige Bolzenhalterverlängerung 4 aufweist, die eine Mutter trägt, die mit einem - nicht dargestellten - Zapfen der Schweißpistole verbindbar ist. Die Bolzenhalterverlängerung 4 trägt endseitig ein Kontaktstück 5 etwa aus Kupfer, das mit Abstand zur Fußplatte 1 angeordnet ist und pistolenseitig einen - nicht dargestellten - Führungsschlitz parallel zur Ebene der Fußplatte aufweist, der einen Schenkel 6 eines Bügels 7 verschiebbar aufnimmt. Der Schenkel 6 besitzt eine Bohrung, durch die sich eine mit dem Kontaktstück 5 verschraubte Schraube 8 erstreckt, wobei zwischen dem Kopf der Schraube 8 und dem Schenkel 6 eine Druckfeder 9 angeordnet ist. Der Bügel 7 besitzt ferner einen zu den Säulen 2 parallelen, sich in Richtung zur Fußplatte 1 erstreckenden Schenkel 10.

Die Fußplatte 1 besitzt einen höhenversetzt zu den Säulen 2 angeordneten und an der zum Schenkel 10 benachbarten Seite der Fußplatte 1 offenen Schlitz 11, in den ein gestufter Keramikring 12 mit seinem einen geringeren Durchmesser aufweisenden Ende einsetzbar ist. Der Schlitz 11 kann vorzugsweise mit einem von der Ebene der Säulen 2 weg geneigten, nach außen offenen Endabschnitt aufweisen, um das Einsetzen eines Schweißbolzens 13 bzw. das Abnehmen der Schweißpistole mit der Stützeinrichtung von einem angeschweißten Schweißbolzen 13 zu erleichtern. Der Keramikring 12 nimmt einen Schweißbolzen 13 aus Rundstahl in Form eines schweineschwanzförmigen Hakens auf, der einen geraden Abschnitt 14 und einen im wesentlichen kreisförmig gebogenen Abschnitt 15 aufweist, wobei der gebogene Abschnitt 15 mit Abstand im wesentlichen über dem geraden Abschnitt 14 endet. Hierbei endet der gebogene Abschnitt 15 vorzugsweise in einem geraden Endabschnitt, der über den geraden Abschnitt 14 hinausragt, so daß die Hakenöse in Seitenansicht vollkommen geschlossen erscheint und dementsprechend eine erhöhte Sicherheit gegen Aushaken bietet.

Das Kontaktstück 5 bildet einen seitlichen Anschlag 16 für den geraden Abschnitt 14 des Schweißbolzens 13, während der Schenkel 10 des Bügels 7 einen seitlichen Gegenanschlag bildet, der am gebogenen Abschnitt 15 des Schweißbolzens 13 angreift. Hierdurch wird der Schweißbolzen 13 auf gegenüberliegenden Seiten kontaktiert.

Am Kontaktstück 5 ist an mindestens einer Seite ein Stützblech 17 mittels zwei Schrauben 18 angebracht, wobei zwischen dem Stützblech 17 und den beiden Schrauben 18 jeweils eine Druckfeder (nicht dargestellt) angeordnet ist, die das Stützblech 17 gegen das Kontaktstück 5 drückt.

Dementsprechend kann der gebogene Schweißbolzen 13 mit dem Keramikring 12 über den Schlitz 11 in die Fußplatte 1 bis zum Anliegen des geraden Abschnitts 14 an dem Anschlag 16 unter Einspannen zwischen den Stützblechen 17 eingeschoben werden, wobei auch der Schenkel 10 in Anlage an den Schweißbolzen 13 gelangt und diesen gegen den Anschlag 16 drückt.

Nach dem elektrischen Anschweißen des Schweißbolzen 13 kann durch entsprechendes Verdrehen der Schweißpistole zum Freigeben des Schenkels 10 und seitlichen Abziehen der Fußplatte 1 von dem Keramikring 12 die Schweißpistole abgezogen werden.

Das Kontaktstück 5 kann auch einen Schlitz zur Aufnahme und zum Abstützen des Schweißbolzens 13 aufweisen, jedoch wird ein Einspannen durch wenigstens ein Stützblech 17 bevorzugt.

## Patentansprüche

1. Stützeinrichtung für einen Schweißbolzens aus Rundstahl in Form eines schweineschwanzförmigen Hakens, der einen geraden Abschnitt (14) und einen im wesentlichen kreisförmig gebogenen Abschnitt (15) aufweist, beim Verschweißen mit einer Schweißpistole, wobei eine Fußplatte (1), die wenigstens eine Säule (2) zum Verbinden der Stützeinrichtung mit der Schweißpistole trägt, und ein über die Schweißpistole spannungsbeaufschlagbares Kontaktstück (5) vorgesehen ist, **dadurch gekennzeichnet, daß** in der Fußplatte (1) ein Schlitz (11) zur Aufnahme eines den Schweißbolzen (13) am Ende seines geraden Abschnitts (14) aufnehmenden Keramikrings (12) vorgesehen ist, und das Kontaktstück (5) eine Halterung für den gebogenen Abschnitt (15) des Schweißbolzens (13) bildet.

2. Stützeinrichtung nach Anspruch 1, **dadurch gekennzeichnet, daß** das Kontaktstück (5) einen verschiebbaren, federvorgespannten Bügel (7) und einen Anschlag (16) für den Schweißbolzen (13) aufweist.

3. Stützeinrichtung nach Anspruch 2, **dadurch gekennzeichnet, daß** das Kontaktstück (5) einen L-förmigen Bügel (7) aufweist.

4. Stützeinrichtung nach einem der Ansprüche 1 bis 3, **dadurch gekennzeichnet, daß** das Kontaktstück (5) wenigstens ein Stützblech (17) für den Schweißbolzen (13) aufweist.

5. Stützeinrichtung nach Anspruch 4, **dadurch gekennzeichnet, daß** das wenigstens eine Stützblech (17) gegen das Kontaktstück (5) federvorgespannt ist.

6. Stützeinrichtung nach einem der Ansprüche 2 bis 5, **dadurch gekennzeichnet, daß** der Schlitz (11) eintrittsseitig von einer parallel zu einem den Keramikring (12) aufnehmenden Endabschnitt des Schlitzes (11) verlaufenden Vertikalebene zur Fußplatte (1) weg geneigt ist.

7. Schweißbolzen aus Rundstahl, wobei der Rundstahl in Form eines schweineschwanzförmigen Hakens gebogen ist, der einen geraden Abschnitt (14) und einen im wesentlichen kreisförmig gebogenen Abschnitt (15) aufweist, wobei der gebogene Abschnitt (15) mit Abstand über dem geraden Abschnitt (14) verläuft und mit seinem freien Ende über den geraden Abschnitt (14) hinausragt.
